# EUROPÄISCHE PATENTANMELDUNG

(11) **EP 2 253 947 A2**
(43) Veröffentlichungstag der Anmeldung: **24.11.2010**
(21) Anmeldenummer: 10004467.6
(22) Anmeldetag: 28.04.2010
(51) Int. Cl.: G01M 17/013, G01M 17/02, G01N 23/04, G01N 23/18

(54) **Verfahren und Vorrichtung zur zerstörungsfreien Materialprüfung**

(30) Priorität: 08.05.2009 DE 102009020369
(71) Anmelder: Maschinenbau u. Konstruktion GmbH Elmshorn, 25368 Kiebitzreihe (DE)
(72) Erfinder: Ottens, Erhard, 25368 Kiebitzreihe (DE)
(74) Vertreter: Thomas, Götz

(57) **Zusammenfassung**

Die Erfindung betrifft ein Verfahren und eine Vorrichtung zur zerstörungsfreien Materialprüfung von Prüfkörpern, insbesondere von Felgen (4) oder Rädern aus Leichtmetallguss, mit einer in einem Gehäuse (12) angeordneten, zum Durchleuchten der Prüfkörper (4) dienenden Durchleuchtungseinrichtung (28), einer Manipulationseinrichtung (54) zum Drehen der Prüfkörper (4) um eine erste Achse (11) und zum Verschwenken der Prüfkörper (4) um eine zur ersten Achse (11) senkrechte zweite Achse (58), sowie Transporteinrichtungen (46, 48, 50) zum Transport der Prüfkörper (4). Um den Platzbedarf des Gehäuses (12) zu verkleinern und die für die Materialprüfung benötigte Zeit zu verkürzen, transportieren die Transporteinrichtungen (46, 48, 50) die Prüfkörper (4) entlang eines geradlinigen horizontalen Transportwegs durch das Gehäuse (12), während die Durchleuchtungseinrichtung (28) in Bezug zum Gehäuse (12) und in Bezug zur Manipulationseinrichtung (54) parallel zum Transportweg beweglich ist.

## Beschreibung

### Beschreibung

Die Erfindung betrifft ein Verfahren und eine Vorrichtung zur zerstörungsfreien Materialprüfung von Formkörpern, insbesondere von Felgen und Rädern aus Leichtmetallguss, gemäß dem Oberbegriff der Ansprüche 1, 5 und 12.

Kraftfahrzeugfelgen aus Leichtmetallguss müssen vor ihrem Einsatz einer zerstörungsfreien Materialprüfung unterzogen werden, die es ermöglicht, Felgen mit Gussfehlern auszusondern. Zu diesem Zweck kann eine Vorrichtung der eingangs genannten Art verwendet werden, in der verschiedene Teilbereiche der Kraftfahrzeugfelgen nacheinander mit Röntgenstrahlung durchleuchtet werden. Bei einer aus der DE 31 15 735 A1 bekannten Vorrichtung werden die Kraftfahrzeugfelgen auf einer schwenkbaren Rutsche durch ein strahlungssicheres Gehäuse der Vorrichtung transportiert, das eine durch ein Schott verschließbare Eintrittsöffnung und eine durch ein Schott verschließbare Austrittsöffnung aufweist. Innerhalb des Gehäuses ist eine Durchleuchtungseinrichtung angeordnet, die eine schwenkbare Röntgenstrahlungsquelle und eine ortsfeste Empfangseinrichtung umfasst. Um die Felgen vollständig zu durchleuchten, werden sie um ihre Mittelachsen gedreht, um nacheinander verschiedene Umfangsabschnitte in den Strahlengang der Durchleuchtungseinrichtung zu bringen. Außerdem müssen dort sowohl die Rutsche als auch die Röntgenstrahlungsquelle um parallele Schwenkachsen verschwenkt werden, die beide quer zur Bewegungsrichtung der Felgen ausgerichtet sind.

Die Schwenkbarkeit der Röntgenstrahlungsquelle und die schräg nach unten verlaufende Bewegungsrichtung der Felgen durch das Gehäuse führen jedoch zu einer Vergrößerung der Standfläche und der Höhe des Gehäuses und damit zu einer Vergrößerung des Platzbedarfs, die eine Fertigung kompakter Vorrichtungen mit einem geringeren Verbrauch an Abschirmmaterial erschwert. Zudem kann die Röntgenstrahlungsquelle der bekannten Vorrichtung erst aktiviert werden, wenn sowohl an der Eintrittsöffnung und an der Austrittsöffnung das Schott geschlossen ist, was neben dem zum Durchleuchten der Felgen erforderlichen komplizierten Bewegungsablauf zu einer Verlängerung der für die Materialprüfung benötigten Zeit führt.

Aus der DE 101 63 846 B4 ist weiter eine Vorrichtung zur Durchleuchtung von Leichtmetallrädern in Röntgen-Prüfanlagen bekannt, bei der die Räder von Greifern erfasst und in einer horizontalen Transportebene entlang eines bogenförmigen Transportpfades durch ein Gehäuse bewegt werden. Die Räder werden dabei von einer Röntgenprüfeinrichtung durchleuchtet, die in Bezug zu den in der Transportebene befindlichen Rädern um eine quer zum Transportpfad verlaufende Achse schwenkbar ist, um es zu ermöglichen, zwei Felgenschultern der Räder separat zu durchleuchten. Ein C-förmiges Trägergestell für die Röntgenprüfeinrichtung ist dort parallel und senkrecht zu der horizontalen Transportebene in einer X-/Y-Richtung bzw. in einer Z-Richtung verschiebbar. Jedoch wird auch hier wegen der Schwenkbarkeit der Röntgenprüfeinrichtung viel Platz und zum Verschwenken derselben auch Zeit benötigt.

Ausgehend hiervon liegt der Erfindung die Aufgabe zugrunde, ein Verfahren und eine Vorrichtung der eingangs genannten Art dahingehend zu verbessern, dass der Platzbedarf des Gehäuses und insbesondere dessen Standfläche verkleinert und die für die Materialprüfung benötigte Zeit verkürzt werden kann.

Diese Aufgabe wird erfindungsgemäß durch die Merkmale im Kennzeichenteil der Ansprüche 1 und 5 sowie 12 gelöst.

Durch die Merkmalskombinationen der Ansprüche 1 und 5 kann auf eine schwenkbare Durchleuchtungseinrichtung verzichtet und damit der dafür erforderlichen Platz eingespart werden, da sich mit der Linearbewegung der Durchleuchtungseinrichtung und den Schwenk- und Drehbewegungen der Prüfkörper bereits sämtliche zu durchleuchtenden Teilbereiche der Prüfkörper in den Strahlengang der Durchleuchtungseinrichtung bringen lassen, die bevorzugt eine Röntgenstrahlungsquelle und eine in einem Strahlengang der Strahlungsquelle angeordnete Abbildungseinheit umfasst.

Das erfindungsgemäße Verfahren und die erfindungsgemäße Vorrichtung werden bevorzugt zur zerstörungsfreien Materialprüfung von rotationssymmetrischen Felgen oder Rädern aus Leichtmetallguss eingesetzt, in welchem Fall die erste Achse der Mittelachse der Felge oder des Rades entspricht. Alternativ können jedoch auch beliebige andere Formkörper geprüft werden, indem man die Prüfkörper vor der Prüfung auf einem rotationssymmetrischen Prüfkörperträger befestigt, der dann zusammen mit dem Prüfkörper um seine Mittelachse gedreht und um die dazu senkrechte zweite Achse verschwenkt wird.

Die Durchleuchtungseinrichtung ist bevorzugt nur mit einem einzigen Freiheitsgrad der Bewegung parallel zum Transportweg beweglich und wird während der Durchleuchtung vorteilhaft in mehrere, zwischen zwei Endpositionen liegende Positionen entlang des Transportwegs bewegt. Im Falle einer Felge wird in einer der beiden Endpositionen die Nabe der in einer horizontalen Transportstellung oder ersten Prüfstellung befindliche Felge durchleuchtet, während in der anderen Endposition die beiden Felgenhörner der in weitere schräge Prüfstellungen verschwenkten Felge nacheinander abschnittsweise durchleuchtet werden. In den zwischen den Endpositionen liegenden Positionen werden andere Teilbereiche der Felge durchleuchtet, wie zum Beispiel die Speichen, das Felgenbett und die Felgenschultern. Zum Durchleuchten dieser zuletzt genannten Teilbereiche der Felge wird diese wie zum Durchleuchten der Felgenhörner ebenfalls zweckmäßig in entgegengesetzte Richtungen um die horizontal und orthogonal zum Transportweg ausgerichtete zweite Achse verschwenkt, um sie aus ihrer horizontalen Transportstellung in verschiedene schräge Prüfstellungen zu bringen, in denen sich jeweils einer der genannten Teilbereiche im Strahlengang der Strahlungsquelle befindet. In den schrägen Prüfstellungen wird die Felge um die erste Achse, d.h. ihre Mittelachse gedreht, um zur Durchleuchtung nacheinander sämtliche in Umfangsrichtung der Felge nebeneinander angeordnete Abschnitte des jeweiligen Teilbereichs in den Strahlengang zu bringen.

Da insbesondere die entgegengesetzten Felgenhörner der Felge in den zugehörigen schrägen Prüfstellungen an unterschiedlichen Stellen in den Strahlengang ragen, ist die Abbildungseinheit bevorzugt in Bezug zur Strahlungsquelle in Richtung von deren optischer Achse beweglich, so dass sich die beiden Felgenhörner mit derselben Vergrößerung abbilden lassen.

Um eine synchrone Linearbewegung der Strahlungsquelle und der die Abbildungseinheit im Gehäuse sicherzustellen, werden beide Komponenten bevorzugt von einem gemeinsamen Träger getragen, der in Führungen parallel zum Transportweg beweglich ist.

Zum Erfassen, Drehen und Schwenken eines Prüfkörpers umfasst die die Manipulationseinrichtung vorteilhafterweise eine Einspanneinrichtung zum Einspannen des Prüfkörpers oder eines Prüfkörperträgers, wenn es sich um nicht-rotationssymmetrische Prüfkörper handelt. Die Einspanneinrichtung ist bevorzugt zusammen mit einem Teil der Transporteinrichtungen um die orthogonal zum Transportweg ausgerichtete horizontale zweite Achse schwenkbar. Um den Prüfkörper oder Prüfkörperträger zu ergreifen und um seine Mittelachse zu drehen, umfasst die Einspanneinrichtung zweckmäßig mehrere, gegen den Umfang des Prüfkörpers oder Prüfkörperträgers anpressbare Andruckrollen, von denen mindestens ein Teil durch eine Antriebseinrichtung antreibbar ist.

Durch die Merkmalskombination des Patentanspruchs 12, d.h. ein Gehäuse mit drei Schleusenkammern und eine Transporteinrichtung mit drei voneinander getrennten Förderern, von denen jeweils einer in jeder der drei Schleusenkammern angeordnet ist, kann noch während der Durchleuchtung eines Prüfkörpers in der mittleren der drei Schleusenkammern der zuletzt durchleuchtete Prüfkörper bereits aus der auslaufseitigen äußeren der drei Schleusenkammern entfernt werden, während der als nächstes zu durchleuchtende Prüfkörper in die einlaufseitige äußere der drei Schleusenkammern zugeführt und dort ggf. zentriert werden kann. Dadurch kann der gerade durchleuchtete Prüfkörper unmittelbar nach dem Durchleuchten aus dem Bereich der Durchleuchtungseinrichtung entfernt und gleichzeitig der als nächstes zu durchleuchtende Prüfkörper in den Bereich der Durchleuchtungseinrichtung zugeführt und in die erste Prüfstellung gebracht werden.

Um während dieses Vorgangs ein Entweichen von Strahlung zu vermeiden, sind vorteilhaft zwei Schleusenöffnungen zwischen der mittleren Schleusenkammer und den beiden äußeren Schleusenkammern jeweils durch ein inneres Schott verschließbar, während eine Einlauf- bzw. Auslauföffnung zwischen der einlauf- bzw. auslaufseitigen äußeren Schleusenkammer und der Umgebung durch ein äußeres Schott verschließbar ist. Zur Steuerung der Schotten ist bevorzugt eine Steuereinrichtung vorgesehen, die ein Öffnen der äußeren Schotten nur bei geschlossenen inneren Schotten und ein Öffnen der inneren Schotten nur bei geschlossenen äußeren Schotten zulässt.

Von den drei Förderern der Transporteinrichtung ist der Förderer in der mittleren Schleusenkammer gemäß einer vorteilhaften Ausgestaltung der Erfindung zusammen mit einer Einspanneinrichtung zum Einspannen eines Prüfkörpers oder Prüfkörperträgers um die orthogonal zum Transportweg ausgerichtete horizontale zweite Achse schwenkbar, so dass er sich zusammen mit dem von der Einspanneinrichtung erfassten Prüfkörper oder Prüfkörperträger verschwenken lässt, während die Förderer in den beiden äußeren Schleusenkammern vorteilhaft zur Annäherung an den oder zur Überlappung mit dem Förderer in der mittleren Schleusenkammer und/oder mit einem Ein- bzw. Auslaufförderer parallel zum Transportweg bewegbar sind, und zwar vorzugsweise so weit, dass der jeweilige Förderer bei geschlossener äußerer Schleusenöffnung durch die geöffnete innere Schleusenöffnung in die mittlere Schleusenkammer ragt bzw. bei geschlossener innerer Schleusenöffnung durch die geöffnete äußere Schleusenöffnung aus dem Gehäuse heraus ragt. Zum Bewegen der Förderer sind diese zweckmäßig auf Wagen verfahrbar.

Die Förderer in benachbarten Schleusenkammern weisen bevorzugt gegeneinander versetzte Fördermittel auf, um zu vermeiden, dass das Fördermittel eines aus einer der beiden äußeren Schleusenkammern in die mittlere Schleusenöffnung ragenden Förderers mit dem Fördermittel des Förderers in der mittleren Kammer zusammenstößt.

Nachfolgend wird die Erfindung anhand eines in der Zeichnung dargestellten Ausführungsbeispiels näher erläutert. Es zeigen:
- Fig. 1:: eine teilweise weggeschnittene Seitenansicht einer erfindungsgemäßen Vorrichtung zum Durchleuchten von Kraftfahrzeugfelgen in einer ersten Prüfstellung einer Felge;
- Fig. 2:: eine teilweise weggeschnittene Oberseitenansicht der
- Fig. 3:: eine Ansicht der Vorrichtung entsprechend Fig. 1, Vorrichtung in der ersten Prüfstellung;
- jedoch: in einer zweiten Prüfstellung;
- Fig. 4:: eine Ansicht der Vorrichtung entsprechend Fig. 2, jedoch in der zweiten Prüfstellung;
- Fig. 5:: eine Ansicht der Vorrichtung entsprechend Fig. 1, in einer dritten Prüfstellung;
- Fig. 6:: eine Ansicht der Vorrichtung entsprechend Fig. 2, in der dritten Prüfstellung.

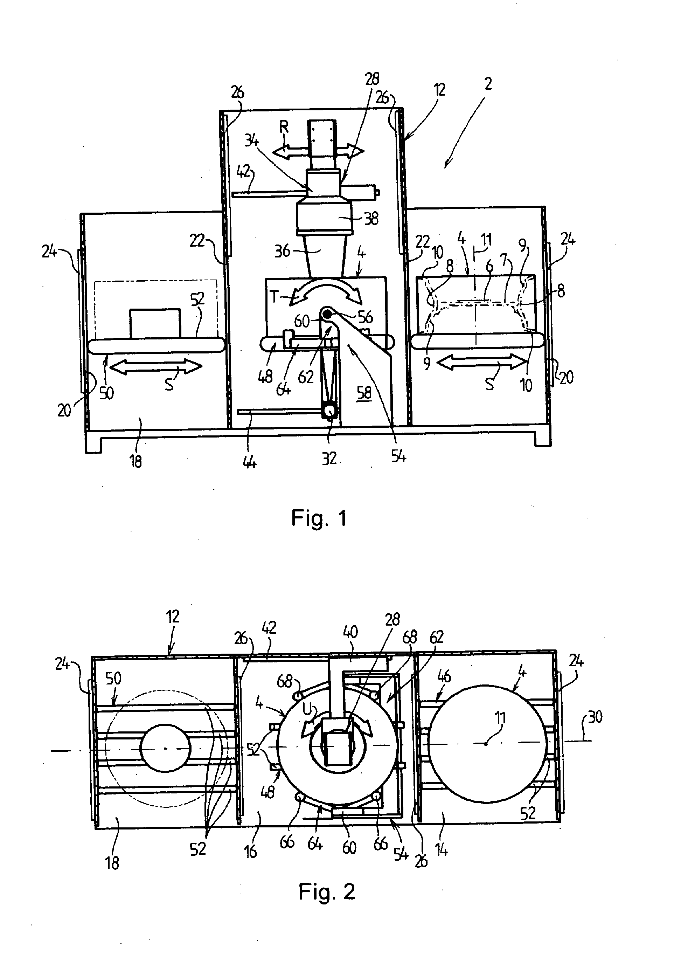

Die in der Zeichnung dargestellte Vorrichtung 2 dient zur zerstörungsfreien Materialprüfung von Kraftfahrzeugfelgen 4 aus Leichtmetallguss, die in bekannter Weise eine Nabe 6, Speichen 7, ein Felgenbett 8, Felgenschultern 9 und Felgenhörner 10 aufweisen können und allgemein rotationssymmetrisch zu einer Längsmittelachse 11 sind, wie in Fig. 1 beispielhaft dargestellt. Die Vorrichtung 2 umfasst ein strahlendichtes Gehäuse 12 mit drei Schleusenkammern 14, 16, 18, die entlang eines horizontalen Transportwegs der Felgen 4 hintereinander angeordnet sind. Der Transport der Felgen 4 durch die drei Schleusenkammern 14, 16, 18 kann wahlweise in beiden Richtungen, d.h. in der Zeichnung von rechts nach links oder von links nach rechts erfolgen, wobei die Materialprüfung in der mittleren Schleusenkammer 16 erfolgt.

Die beiden äußeren Schleusenkammern 14, 18 sind auf ihrer von der mittleren Schleusenkammer 16 abgewandten Seite mit einer Einlauf- bzw. Auslauföffnung 20 und auf ihrer der mittleren Schleusenkammer 16 zugewandten Seite mit einer Schleusenöffnung 22 versehen. Die Einlauf- und die Auslauföffnung 20 sind jeweils mit einem verschließbaren äußeren Schott 24 versehen, während die beiden Schleusenöffnungen 22 jeweils mit einem verschließbaren inneren Schott 26 versehen sind. Zum Öffnen und Schließen der vertikal beweglichen Schotte 24, 26 dienen jeweils elektromotorische Stellorgane (nicht dargestellt) und eine gemeinsame Steuerung, die ein Öffnen der äußeren Schotte 24 nur bei geschlossenen inneren Schotten 26 und ein Öffnen der inneren Schotten 26 nur bei geschlossenen äußeren Schotten 24 zulässt.

In der mittleren Schleusenkammer 14 befindet sich eine zum Durchleuchten der Felgen 4 dienende Durchleuchtungseinrichtung 28. Die Durchleuchtungseinrichtung 28 weist eine etwa in der Längsmittelebene 30 des Gehäuses 12 unterhalb des Transportwegs der Felgen 4 angeordnete Röntgenstrahlungsquelle 32 und eine oberhalb des Transportwegs und der Röntgenstrahlungsquelle 32 angeordnete Abbildungseinheit 34 auf. Die Abbildungseinheit 34 umfasst eine im Strahlengang 36 der Röntgenstrahlungsquelle 32 befindliche Bildverstärkerröhre 38 und ein bildgebendes System zur Aufnahme eines von der Bildverstärkerröhre 38 erzeugten Röntgenbildes.

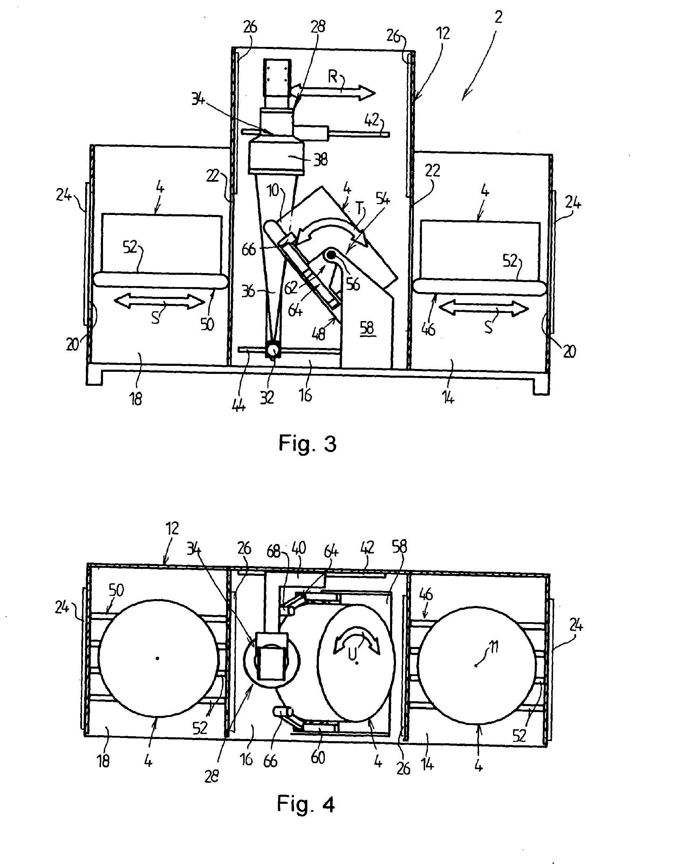

Die Röntgenstrahlungsquelle 32 und die Abbildungseinheit 34 sind übereinander an einem vertikalen Träger 40 angebracht, mit dem sie durch horizontale Ausleger so verbunden sind, dass sie in Bezug zueinander nur in vertikaler Richtung entlang einer optischen Achse des Strahlengangs 36 beweglich sind. Der Träger 40 ist mittels eines Stellantriebs (nicht dargestellt) entlang von zwei übereinander an einer Seitenwand der Schleusenkammer 16 befestigten horizontalen Führungen 42, 44 parallel zum Transportweg der Felgen 4 verfahrbar. Wie durch den Doppelpfeil R dargestellt, kann die Durchleuchtungseinrichtung 28 auf diese Weise entlang des Transportwegs der Felgen 4 gesteuert zwischen einer ersten, in Fig. 1 und 2 dargestellten Position und einer zweiten, in den Figuren 3 bis 6 dargestellten Position verfahren werden.

Darüber hinaus kann die Abbildungseinheit 34 mittels eines weiteren Stellantriebs entlang des Trägers 40 vertikal entlang der optischen Achse des Strahlengangs 36 verfahren werden, um bei der Durchleuchtung der entgegegengesetzten Felgenschultern 9 und Felgenhörner 10 einer Felge 4 jeweils Röntgenbilder mit unterschiedlichen Vergrößerungen zu erzeugen, wie später beschrieben wird.

Die Vorrichtung 2 umfasst weiter eine Transporteinrichtung, mit der die Felgen 4 von einem Einlaufförderer (nicht dargestellt) entlang des Transportwegs einzeln nacheinander durch die drei Schleusenkammern 14, 16, 18 bis zu einem Auslaufförderer (nicht dargestellt) transportiert werden können.

Die Transporteinrichtung besteht aus drei entlang des Transportwegs hintereinander angeordneten horizontalen Kettenförderern 46, 48, 50, von denen jeweils einer in jeder Schleusenkammer 14, 16, 18 angeordnet ist. Die Kettenförderer 46, 48, 50 weisen jeweils mehrere in Transportrichtung nebeneinander angeordnete, an den Stirnenden über Umlenkrollen geführte parallele endlose Förderketten 52 auf. Die Umlenkrollen sind mit Antrieben (nicht dargestellt) versehen, die es gestatten, die Förderketten 52 sämtlicher Kettenförderer 46, 48, 50 gleichzeitig mit derselben Transportgeschwindigkeit anzutreiben.

Die beiden Kettenförderer 46, 50 in den äußeren Kammern 14, 18 sind jeweils auf einem Wagen (nicht dargestellt) montiert. Wie durch die Doppelpfeile S dargestellt, sind die beiden Wagen einschließlich der Kettenförderer 46, 50 innerhalb der Kammern entlang des Transportwegs der Felgen 4 zwischen zwei Endstellungen verfahrbar, wobei in einer inneren Endstellung (nicht dargestellt) die zur mittleren Kammer 16 benachbarten Umlenkrollen der beiden Kettenförderer 46, 50 durch die beiden geöffneten inneren Schleusenöffnungen 22 in die mittlere Kammer 16 ragen und sich die Kettenförderer 46, 50 dort mit dem Kettenförderer 48 überlappen. Um eine solche Überlappung zu ermöglichen, weisen die Kettenförderer 46, 50 vier und der Kettenförderer 48 zwei nebeneinander angeordnete Förderketten 52 auf, wobei die letzteren in Bezug zu den ersteren seitlich versetzt sind. Der Abstand der nebeneinander angeordneten Förderketten 52 des Kettenförderers 48 ist dabei größer als der Durchmesser des Strahlengangs 36 der Röntgenstrahlungsquelle 32 in Höhe des Transportwegs, so dass diese Förderketten 52 von der Abbildungseinheit 34 nicht abgebildet werden.

In der äußeren Endstellung können die äußeren Umlenkrollen je nach Art des Einlauf- bzw. Auslaufförderers ebenfalls durch die geöffnete Einlauf- bzw. Auslauföffnung 20 aus der Kammer 14 bzw. 18 ragen, wenn eine Überlappung mit dem Einlauf- bzw. Auslaufförderer erwünscht bzw. erforderlich ist.

In der mittleren Schleusenkammer 16 befindet sich weiter eine Manipulationseinrichtung 54, mit der eine zu durchleuchtende Felge 4 ergriffen, um ihre Längsmittelachse 11 gedreht und um eine zu ihrer Längsmittelachse 11 senkrechte Schwenkachse 56 aus einer während des Transports eingenommenen horizontalen Lage in verschiedene schräge Prüfstellungen verschwenkt werden kann, um die Speichen 7, das Felgenbett 8, die Felgenschultern 9 und die Felgenhörner 10 zum Durchleuchten nacheinander in den Strahlengang 36 zwischen der Röntgenstrahlungsquelle 32 und der Abbildungseinheit 28 zu bringen, wie am besten in den Figuren 3 und 4 bzw. 5 und 6 beispielhaft für die entgegengesetzten Felgenhörner 10 dargestellt, und dann um die Längsmittelachse 11 zu drehen.

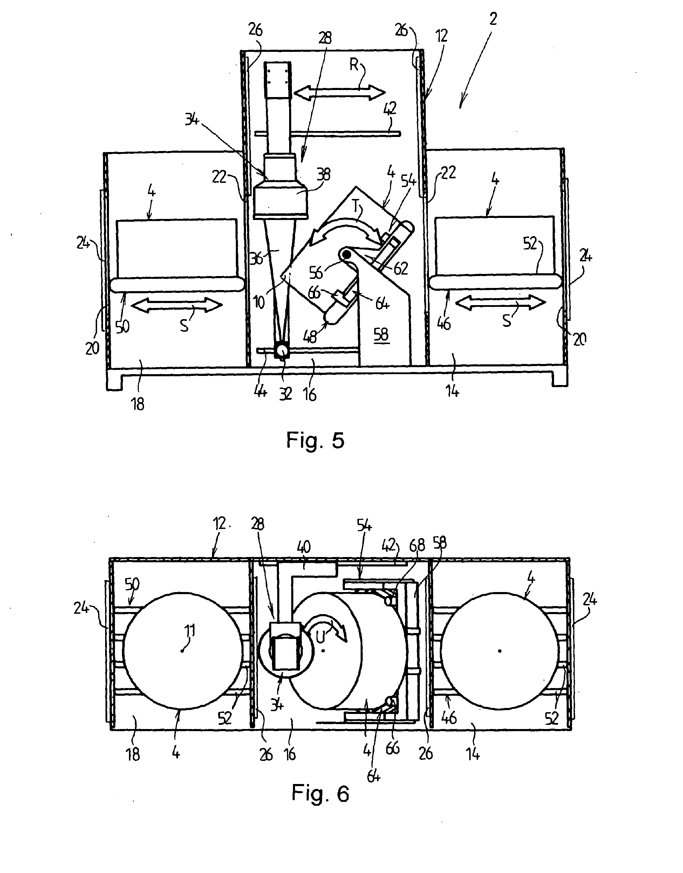

Die Manipulationseinrichtung 54 umfasst einen innerhalb der Kammer 16 montierten ortfesten, im Querschnitt U-förmigen Lagerbock 58 mit einem am Boden der Kammer 14 befestigten Joch und zwei nach oben überstehenden vertikalen Schenkeln. Die beiden Schenkel sind an ihren oberen Enden mit Schwenklagern 60 versehen. In den beiden Schwenklagern 60 ist ein Tragelement 62 aufgehängt, das eine Einspanneinrichtung 64 zum drehbaren Einspannen einer Felge 4 sowie den Kettenförderer 48 trägt. Das gesamte Tragelement 62 einschließlich des Kettenförderers 48 und der Einspanneinrichtung 64 kann mit Hilfe eines nicht dargestellten Schwenkantriebs mit umkehrbarer Drehrichtung in Richtung des Doppelpfeils T um die Schwenkachse 56 geschwenkt werden, um zum Beispiel nacheinander das dem Kettenförderer 48 zugewandte, nach unten weisende Felgenhorn 10 bzw. die das Kettenförderer 48 abgewandte, nach oben weisende Felgenhorn 10 der in der Einspanneinrichtung 64 eingespannten Felge 4 in den Strahlengang 36 zu schwenken, wie in Fig. 3 bzw. 5 dargestellt.

Die Einspanneinrichtung 64 umfasst zwei Paare von Andruckrollen 66, 68, die von entgegengesetzten Seiten her senkrecht zur Längsmittelebene 30 des Gehäuses 12, d.h. quer zur Transportrichtung der Felgen 4, gegen das zum Förderer 48 benachbarte Felgenhorn 10 der auf dem Kettenförderer 48 aufliegenden Felge 4 angepresst werden können, um die Felge 4 zwischen den Andruckrollenpaaren 66, 68 zu ergreifen und gegebenenfalls ein wenig vom Kettenförderer 48 abzuheben. Mindestens eine der Andruckrollen 66, 68 weist einen elektrischen Drehantrieb (nicht dargestellt) mit umkehrbarer Drehrichtung auf, so dass sich die in der Einspanneinrichtung 64 eingespannte Felge 4 durch Antreiben dieser Andruckrolle um ihre Längsmittelachse 11 drehen lässt, um einen im Strahlengang 36 der Röntgenstrahlungsquelle 32 befindlichen Teilbereich der Felge, wie die Speichen 7, das Felgenbett 8 oder eines der Felgenhörner 10, in Umfangsrichtung der Felge 4 schrittweise durch den Strahlengang 36 zu bewegen und ihn dabei zu durchleuchten, wie durch den Doppelpfeil U in Fig. 2, 4 und 6 dargestellt. Die Andruckrollen 66, 68 dienen gleichzeitig dazu, eventuelle Grate an die Felgenhörner 10 anzuwalzen.

Der Lagerbock 54 ist so in der Kammer 16 angeordnet, dass die Schwenkachse 56 der Schwenklager 60 des Tragelements 62 die optische Achse des Strahlengangs 36 der Röntgenstrahlungsquelle 32 kreuzt, wenn sich die Durchleuchtungseinrichtung 28 in ihrer in Fig. 1 und 2 dargestellten Position befindet. Auf diese Weise wird sichergestellt, dass die optische Achse mit der Längsmittelachse 11 der Felge 4 zusammenfällt, wenn diese in der Einspanneinrichtung 64 eingespannt ist.

Die einlaufseitige Schleusenkammer 14 bzw. 18 umfasst jeweils eine Zentriereinrichtung (nicht dargestellt), mit der sich die Felgen 4 auf dem Kettenförderer 46 bzw. 50 dieser Kammer 14 bzw. 18 ungeachtet von eventuellen unterschiedlichen Felgendurchmessern in einer solchen Lage zentrieren lassen, dass ihre Längsmittelachsen 11 einen konstanten Abstand von der Schwenkachse 56 der Manipulationseinrichtung 54 aufweisen. Dies gestattet es, die beiden Kettenförderer 46, 50 nach ihrem Verfahren in die inneren Endstellungen über eine definierte Zeitdauer mit konstanter Transportgeschwindigkeit anzutreiben, so dass die auf den Kettenförderern 46, 50 liegenden Felgen 4 eine definierte Wegstrecke zurücklegen, die genau diesem Abstand entspricht. Durch die Zentrierung der Felgen 4 in der einlaufseitigen Kammer 14 bzw. 18 kann die Verweilzeit der Felgen 4 in der mittleren Kammer 16 und damit die gesamte, für die Prüfung einer Felge 4 erforderliche Zeit verkürzt werden.

Zur Durchleuchtung einer Felge 4 werden zuerst die beiden inneren Schotten 26 geschlossen und die beiden äußeren Schotten 24 geöffnet, um die Felge 4 durch die Einlauföffnung 20 in die einlaufseitige Schleusenkammer 14 bzw. 18 zu transportieren und ggf. auf dem Kettenförderer 46 bzw. 50 zu zentrieren. Danach werden die äußeren Schotten 24 geschlossen und die inneren Schotten 26 geöffnet, wie in der Zeichnung dargestellt. Die beiden Kettenförderer 46, 50 können dann in Richtung der inneren Schleusenkammer 16 verfahren werden, bis ihre inneren Umlenkrollen durch die Schleusenöffnungen 22 in die innere Schleusenkammer 16 ragen. Anschließend werden alle drei Kettenförderer 46, 48, 50 angetrieben, um die auf den Förderern aufliegenden Felgen 4 um eine definierte Wegstrecke vorwärts zu bewegen. Diese Wegstrecke ist so bemessen, dass die zuvor in der einlaufseitigen Schleusenkammer 14 bzw. 18 befindliche Felge 4 nach der Vorwärtsbewegung derart in der mittleren Schleusenkammer 16 positioniert ist, dass ihre Längsmittelachse 11 nach dem Einspannen der Felge 4 in der Einspanneinrichtung 64 in einer in Fig. 1 und 2 dargestellten ersten Prüfstellung mit der optischen Achse der Röntgenstrahlungsquelle 32 fluchtet, wenn sich die Durchleuchtungseinrichtung 28 in ihrer in Fig. 1 und 2 dargestellten ersten Endposition befindet. In der ersten Prüfstellung bleiben das Tragelement 62, der Kettenförderer 48 und die Felge 4 horizontal ausgerichtet, während die Nabe 6 der Felge 4 durchleuchtet wird.

Sobald sich die zu durchleuchtende Felge 4 in der ersten Prüfstellung befindet, können die Kettenförderer 46, 50 wieder vollständig in die beiden äußeren Schleusenkammern 14 und 18 zurückbewegt werden, um das Schließen der inneren Schotte 28 zu ermöglichen.

In der mittleren Schleusenkammer 16 werden als nächstes die Speichen 7, das Felgenbett 8, die beiden Felgenschultern 9 und die beiden Felgenhörner 10 der Felge 4 durchleuchtet. Zu diesem Zweck wird zum einen die Durchleuchtungseinrichtung 32 entlang des Transportwegs der Felgen 4 bzw. des Doppelpfeils R in verschiedene Positionen über der Felge 4 verfahren und zum anderen das Tragelement 62 mitsamt der Felge 4 in verschiedene Schwenkstellungen gebracht, in denen sich jeweils einer der zu durchleuchtenden Teilbereiche 7, 8, 9, 10 im Strahlengang 36 der Röntgenstrahlungsquelle 32 befindet, wie in Fig. 3 und 4 bzw. in Fig. 5 und 6 beispielhaft dargestellt, wo in der zweiten Endposition der Durchleuchtungseinrichtung 28 das zum Kettenförderer 48 benachbarte untere Felgenhorn 10 in einer zweiten Prüfstellung (Fig. 3 und 4) bzw. das vom Kettenförderer 48 abgewandte obere Felgenhorn 10 in einer dritten Prüfstellung in den Strahlengang 36 der Durchleuchtungseinrichtung 28 ragt. In den verschiedenen Schwenkstellungen wird die Felge 4 durch intermittierendes Antreiben der mit dem Drehantrieb versehenen Andruckrolle(n) 66, 68 schrittweise um vorgegebene Drehwinkel um ihre Längsmittelachse 11 gedreht und zwischen den Drehungen ausreichend lange angehalten, um jeweils den im Strahlengang 36 befindlichen Teilbereich 7, 8, 9, 10 der Felge 4 um deren Umfang herum abschnittsweise zu durchleuchten und abzubilden.

Um zu vermeiden, dass die Bilder der beiden entgegengesetzten Felgenhörner 10 wegen der Strahlaufweitung der Röntgenstrahlung und wegen des unterschiedlichen Abstands der Felgenhörner 10 von der Röntgenstrahlungsquelle 32 einen unterschiedlichen Maßstab besitzen, wird beim Verschwenken der Felge 4 aus der zweiten Prüfstellung in die dritte Prüfstellung die Abbildungseinheit 38 nach unten auf die Röntgenstrahlungsquelle 32 zu bewegt, wie in Fig. 5 dargestellt.

Während der Durchleuchtung der Felge 4 in der mittleren Schleusenkammer 16 werden sofort nach dem Schließen der inneren Schotten 26 die Schotten 24 der beiden äußeren Schleusenkammern 14, 18 geöffnet, um eine weitere Felge 4 in die einlaufseitige Schleusenkammer 14 bzw. 18 zuzuführen und in der Kammer 14 bzw. 18 zu zentrieren. Danach werden noch während der Durchleuchtung der Felge 4 in der mittleren Schleusenkammer 16 die äußeren Schotten 24 geschlossen und die inneren Schotten 26 geöffnet, um die beiden Kettenförderer 48, 50 in Richtung der mittleren Schleusenkammer 16 zu verfahren, bis ihrer Umlenkrollen durch die Schleusenöffnungen 22 in die Schleusenkammer 16 ragen.

Sobald die dort befindliche Felge 4 fertig durchleuchtet worden ist, wird das Tragelement 62 in seine horizontale Stellung zurück geschwenkt und die Durchleuchtungseinrichtung 28 in die erste Position zurück bewegt. Nach dem Verschwenken des Tragelements 62 und dem Lösen der Einspanneinrichtung 64 können sofort sämtliche Kettenförderer 46, 48, 50 angetrieben werden, um die fertig durchleuchtete Felge 4 in die auslaufseitige Schleusenkammer 18 bzw. 14 und die als nächstes zu durchleuchtende Felge 4 aus der einlaufseitigen Schleusenkammer 14 bzw. 18 in die mittlere Schleusenkammer 16 zu bewegen, wobei die Länge der Bewegungswege der beiden Felgen 4 dieselbe ist.

Während anschließend die in der mittleren Schleusenkammer 16 befindliche Felge 4 durchleuchtet wird, wie zuvor beschrieben, wird nach dem Schließen der inneren Schotten 26 und dem Öffnen der äußeren Schotten 14 die in der auslaufseitigen Kammer 18 bzw. 14 befindliche Felge 4 aus dieser Kammer herausbewegt, um dort wieder Platz zu schaffen, während zugleich eine weitere Felge 4 in die einlaufseitige Schleusenkammer 14 bzw. 18 zugeführt und dort zentriert wird, wie zuvor beschrieben.

Da es mit der Vorrichtung 2 und dem Verfahren, wie zuvor beschrieben, möglich ist, während der Durchleuchtung einer Felge 4 die unmittelbar zuvor durchleuchtete Felge 4 bereits aus dem Gehäuse 12 abzutransportieren und die als nächstes zu durchleuchtende Felge 4 bereits in das Gehäuse zuzuführen, zu zentrieren und teilweise in die mittlere Schleusenkammer 16 vorwärts zu bewegen und anschließend sämtliche Förderer 46, 48, 50 gleichzeitig um dasselbe Maß anzutreiben, um die nächste Felge 4 in eine erste Prüfstellung zu bringen und die gerade durchleuchtete Felge 4 aus der mittleren Schleusenkammer 16 abzuführen, kann die benötigte Bearbeitungszeit sehr stark verkürzt werden. Dazu trägt auch bei, dass es zum Durchleuchten einer Felge 4 abgesehen von der Drehung der Felge 4 um ihre Längsmittelachse 11 nur erforderlich ist, die Felge 4 um die Schwenkachse 56 zu kippen und die Durchleuchtungseinrichtung 28 entlang des Transportpfades der Felgen 4 nacheinander in verschiedene Positionen zu verfahren.

## Patentansprüche

1. Verfahren zur zerstörungsfreien Materialprüfung von Prüfkörpern, insbesondere von Felgen oder Rädern aus Leichtmetallguss, bei dem jeweils einer der Prüfkörper zu einer Manipulationseinrichtung transportiert und dann von der Manipulationseinrichtung um eine erste Achse gedreht und in Bezug zu einer Durchleuchtungseinrichtung um eine zur ersten Achse senkrechte zweite Achse verschwenkt wird, um nacheinander verschiedene Teilbereiche des Prüfkörpers zu durchleuchten, **dadurch gekennzeichnet, dass** der Prüfkörper (4) entlang eines geradlinigen horizontalen Transportwegs zur Manipulationseinrichtung (54) transportiert wird, und dass die Durchleuchtungseinrichtung (28) im Zuge der Durchleuchtung des Prüfkörpers (4) parallel zum Transportweg bewegt wird.

2. Verfahren nach Anspruch 1, **dadurch gekennzeichnet, dass** der Prüfkörper (4) in unterschiedlichen Schwenkstellungen durchleuchtet wird, wobei unterschiedliche Teilbereiche des Prüfkörpers durch Drehen des Prüfkörpers (4) um die erste Achse (11) schrittweise durch einen Strahlengang (36) der Durchleuchtungseinrichtung (28) bewegt werden.

3. Verfahren nach Anspruch 1 oder 2, **dadurch gekennzeichnet, dass** der Prüfkörper (4) um die orthogonal zum Transportweg ausgerichtete horizontale zweite Achse (56) verschwenkt wird, um den Prüfkörper (4) schräg auszurichten.

4. Verfahren nach einem der vorangehenden Ansprüche, dass der Prüfkörper (4) aus einer horizontalen Transportstellung in entgegengesetzte Richtungen um die zweite Achse (58) verschwenkt wird, um den Prüfkörper (4) in verschiedenen schrägen Ausrichtungen durch einen Strahlengang (36) der Durchleuchtungseinrichtung (28) zu bewegen.

5. Vorrichtung zur zerstörungsfreien Materialprüfung von Prüfkörpern, insbesondere von Felgen oder Rädern aus Leichtmetallguss, mit einer in einem Gehäuse angeordneten Durchleuchtungseinrichtung zum Durchleuchten der Prüfkörper, einer Manipulationseinrichtung zum Drehen der Prüfkörper um eine erste Achse und zum Verschwenken der Prüfkörper um eine zur ersten Achse senkrechte zweite Achse, sowie Transporteinrichtungen zum Transport der Prüfkörper, **dadurch gekennzeichnet, dass** die Transporteinrichtungen (46, 48, 50) die Prüfkörper (4) entlang eines geradlinigen horizontalen Transportwegs durch das Gehäuse (12) transportieren und dass die Durchleuchtungseinrichtung (28) in Bezug zum Gehäuse (12) und in Bezug zur Manipulationseinrichtung (54) parallel zum Transportweg beweglich ist.

6. Vorrichtung nach Anspruch 5, **dadurch gekennzeichnet, dass** die Durchleuchtungseinrichtung (28) eine Strahlungsquelle (32) und eine in einem Strahlengang (36) der Strahlungsquelle (32) angeordnete Abbildungseinheit (34) umfasst.

7. Vorrichtung nach Anspruch 6, **dadurch gekennzeichnet, dass** die Strahlungsquelle (32) und die Abbildungseinheit (34) unterhalb bzw. oberhalb des Transportwegs der Prüfkörper (4) angeordnet sind.

8. Vorrichtung nach Anspruch 6 oder 7, **dadurch gekennzeichnet, dass** die Strahlungsquelle (32) und die Abbildungseinheit (34) von einem gemeinsamen Träger (40) getragen werden, der in Führungen parallel zum Transportweg beweglich ist.

9. Vorrichtung nach einem der Ansprüche 6 bis 8, **dadurch gekennzeichnet, dass** die Strahlungsquelle (32) und die Abbildungseinheit (34) in Bezug zueinander in Richtung einer optischen Achse des Strahlengangs beweglich sind.

10. Vorrichtung nach einem der Ansprüche 5 bis 9, **dadurch gekennzeichnet, dass** die Manipulationseinrichtung (54) eine Einspanneinrichtung (60) zum Einspannen und Drehen eines Prüfkörpers (4) umfasst, wobei die Einspanneinrichtung (60) um eine orthogonal zum Transportweg ausgerichtete horizontale Schwenkachse (56) eines ortsfesten Trägers (58) der Manipulationseinrichtung (54) schwenkbar ist.

11. Vorrichtung nach einem der Ansprüche 5 bis 10, **dadurch gekennzeichnet, dass** die Manipulationseinrichtung (54) einen Teil (48) der Transporteinrichtungen (46, 48, 50) umfasst, der um eine orthogonal zum Transportweg ausgerichtete horizontale Schwenkachse (56) eines ortsfesten Trägers (58) der Manipulationseinrichtung (54) schwenkbar ist.

12. Vorrichtung zur zerstörungsfreien Materialprüfung von Prüfkörpern, insbesondere von Felgen oder Rädern aus Leichtmetallguss, mit einer in einem Gehäuse angeordneten Durchleuchtungseinrichtung zum Durchleuchten der Prüfkörper, einer Manipulationseinrichtung zum Drehen der Prüfkörper um eine erste Achse und zum Verschwenken der Prüfkörper um eine zur ersten Achse senkrechte zweite Achse, sowie Transporteinrichtungen zum Transport der Prüfkörper, insbesondere nach einem der Ansprüche 5 bis 12, **dadurch gekennzeichnet, dass** das Gehäuse (12) drei Schleusenkammern (14, 16, 18) umfasst, und dass die Transporteinrichtung drei voneinander getrennte Förderer (46, 48, 50) umfasst, von denen jeweils einer in jeder der Schleusenkammern (14, 16, 18) angeordnet ist.

13. Vorrichtung nach Anspruch 12, **dadurch gekennzeichnet, dass** zwischen der mittleren Schleusenkammer (16) und den beiden äußeren Schleusenkammern (14, 18) jeweils eine durch ein inneres Schott (26) verschließbare Schleusenöffnung (22) angeordnet ist, und dass zwischen den beiden äußeren Schleusenkammern (14, 18) und der Umgebung eine durch ein äußeres Schott (24) verschließbare Einlauf- bzw. Auslauföffnung (20) angeordnet ist.

14. Vorrichtung nach einem der Ansprüche 12 oder 13, **dadurch gekennzeichnet, dass** die Durchleuchtungseinrichtung (28) und die Manipulationseinrichtung (54) in der mittleren Schleusenkammer (16) angeordnet sind und dass der Förderer (48) in der mittleren Schleusenkammer (16) zusammen mit einer Einspanneinrichtung (64) zum Einspannen eines Prüfkörpers (4) um eine orthogonal zum Transportweg ausgerichtete horizontale Schwenkachse (56) schwenkbar ist.

15. Vorrichtung nach einem der Ansprüche 12 bis 14, **dadurch gekennzeichnet, dass** die Förderer (46, 50) in den beiden äußeren Schleusenkammern (14, 18) zur Annäherung an oder zur Überlappung mit dem Förderer (48) in der mittleren Kammer (16) und/oder mit einem Ein- bzw. Auslaufförderer parallel zum Transportweg bewegbar sind.
